(19) Europäisches Patentamt / European Patent Office / Office européen des brevets

(11) **EP 3 678 130 A1**

(12) **EUROPEAN PATENT APPLICATION**
published in accordance with Art. 153(4) EPC

(43) Date of publication:
**08.07.2020 Bulletin 2020/28**

(21) Application number: **18867037.6**

(22) Date of filing: **02.08.2018**

(51) Int Cl.:
*G10L 15/00* (2013.01)　　*G10L 15/10* (2006.01)

(86) International application number:
**PCT/JP2018/029003**

(87) International publication number:
**WO 2019/073669 (18.04.2019 Gazette 2019/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.10.2017　JP 2017199172**

(71) Applicant: **Sony Corporation**
**Tokyo 108-0075 (JP)**

(72) Inventor: **HORIE, Kazuyoshi**
**Tokyo 140-0002 (JP)**

(74) Representative: **D Young & Co LLP**
**120 Holborn**
**London EC1N 2DY (GB)**

(54) **INFORMATION PROCESSING DEVICE, INFORMATION PROCESSING METHOD, AND PROGRAM**

(57)　To enable provision of information more appropriate to a user's preference according to situations without complicated operations.

An information processing apparatus includes an acquisition unit configured to acquire one or more keywords extracted on the basis of a voice uttered by one or more users, and an extraction unit configured to compare a feature amount calculated according to a word constituting character information included in content of one or more pieces of content and the acquired one or more keywords to extract at least some content from the one or more pieces of content.

*FIG. 1*

**Description**

TECHNICAL FIELD

The present disclosure relates to an information processing apparatus, an information processing method, and a program.

BACKGROUND ART

With the development of network technology, users can browse a wide variety of information scattered in various places via a network such as the Internet. Furthermore, in recent years, there has also been provided a service (hereinafter also referred to as "search service") that searches and presents information related to the keyword from a wide variety of information accessible via a network (in other words, information existing on the network) by specifying a desired keyword. For example, Patent Document 1 discloses an example of technology that searches information and presents it to a user.

CITATION LIST

PATENT DOCUMENT

Patent Document 1: Japanese Patent Application Laid-Open No. 2003-178096

SUMMARY OF THE INVENTION

PROBLEMS TO BE SOLVED BY THE INVENTION

By the way, in the conventional service, in order to present information to a user, a trigger corresponding to an active operation by the user such as input of a search keyword is required. On the other hand, there are various media on which the user can passively acquire information, such as so-called television broadcasting and radio broadcasting. However, it is difficult to say that the information provided by television broadcasting or radio broadcasting is information transmitted to individual users, and information according to individual user's preference or information appropriate to the situations is not necessarily provided to the user.

In view of this, the present disclosure proposes a technology that can provide information more appropriate to the user's preference according to the situations without complicated operations.

SOLUTIONS TO PROBLEMS

According to the present disclosure, there is provided an information processing apparatus including: an acquisition unit configured to acquire one or more keywords extracted on the basis of a voice uttered by one or more users; and an extraction unit configured to compare a feature amount calculated according to a word constituting character information included in content of one or more pieces of content and the acquired one or more keywords to extract at least some content from the one or more pieces of content.

Furthermore, according to the present disclosure, there is provided an information processing method, by a computer, including: acquiring one or more keywords extracted on the basis of a voice uttered by one or more users; and comparing a feature amount calculated according to a word constituting character information included in content of one or more pieces of content and the acquired one or more keywords to extract at least some content from the one or more pieces of content.

Furthermore, according to the present disclosure, there is provided a program causing a computer to execute: acquiring one or more keywords extracted on the basis of a voice uttered by one or more users; and comparing a feature amount calculated according to a word constituting character information included in content of one or more pieces of content and the acquired one or more keywords to extract at least some content from the one or more pieces of content.

EFFECTS OF THE INVENTION

As described above, according to the present disclosure, there is provided a technology that can provide information more appropriate for the user's preference according to the situations without complicated operations.

Note that the effects described above are not necessarily limitative. With or in the place of the above effects, there may be achieved any one of the effects described in this specification or other effects that may be grasped from this specification.

BRIEF DESCRIPTION OF DRAWINGS

Fig. 1 is a diagram illustrating an example of a system configuration of an information processing system according to an embodiment of the present disclosure.

Fig. 2 is a block diagram illustrating an example of a function configuration of a terminal apparatus according to the embodiment.

Fig. 3 is an explanatory diagram for explaining an example of a function configuration of an information processing apparatus according to the embodiment.

Fig. 4 is an explanatory diagram for explaining an example of a schematic processing flow related to keyword extraction by the information processing apparatus according to the embodiment.

Fig. 5 is an explanatory diagram for explaining an example of voice recognition processing by the information processing apparatus according to the embodiment.

Fig. 6 is an explanatory diagram for explaining an example of processing related to keyword extraction by the information processing apparatus according to the embodiment.

Fig. 7 is an explanatory diagram for explaining an example of a result of morphological analysis processing.

Fig. 8 is an explanatory diagram for explaining an example of a keyword extraction result.

Fig. 9 is an explanatory diagram for explaining an example of processing related to content extraction by the information processing apparatus according to the embodiment.

Fig. 10 is an explanatory diagram for explaining an example of a UI of the terminal apparatus according to the embodiment.

Fig. 11 is an explanatory diagram for explaining an example of the UI of the terminal apparatus according to the embodiment.

Fig. 12 is an explanatory diagram for explaining an example of the UI of the terminal apparatus according to the embodiment.

Fig. 13 is an explanatory diagram for explaining an example of a mechanism for grouping users in an information processing system according to a variation.

Fig. 14 is a diagram illustrating an example of a system configuration of the information processing system according to a variation.

Fig. 15 is an explanatory diagram for explaining an example of a result of processing related to grouping of users in the information processing system according to a variation.

Fig. 16 is an explanatory diagram for explaining an example of processing of an information processing apparatus according to a variation.

Fig. 17 is an explanatory diagram for explaining an application example of an information processing system according to an embodiment of the present disclosure.

Fig. 18 is a function block diagram illustrating a configuration example of a hardware configuration of an information processing apparatus constituting an information processing system according to an embodiment of the present disclosure.

MODE FOR CARRYING OUT THE INVENTION

Preferred embodiments of the present disclosure will be described in detail below with reference to the accompanying drawings. Note that, in this description and the drawings, configuration elements that have substantially the same function and configuration are denoted with the same reference numerals, and repeated explanation is omitted.
Note that the description is given in the order below.

1. Introduction
2. Configuration

   2.1. System configuration
   2.2. Function configuration

3. Processing

   3.1. Keyword extraction based on voice data

3.2. Extraction of content related to keywords
3.3. Presentation of information according to content extraction results
3.4. Supplement

4. Variations
5. Hardware configuration
6. Conclusion

<<1. Introduction>>

With the development of network technology, users can browse a wide variety of information scattered in various places via a network such as the Internet. Particularly in recent years, there has also been provided a so-called search service that searches and presents information related to the keyword from a wide variety of information accessible via a network by specifying a desired keyword.

Furthermore, in recent years, along with the development of voice recognition technology and natural language processing technology, it has become possible for users to input various types of information to information processing apparatuses or information processing systems by uttering a voice. Such so-called voice input has also been applicable to so-called network services such as the search service described above.

On the other hand, in the conventional service, in order to present information to the user, a trigger corresponding to an active operation by the user such as input of a search keyword is required. Furthermore, the conventional service only searches information depending on the keyword input by the user, and does not necessarily provide information that is more appropriate to the situations or information that is more appropriate to the user's personal preferences.

On the other hand, there are various media on which the user can passively acquire information, such as so-called television broadcasting and radio broadcasting. However, it is difficult to say that information provided by television broadcasting or radio broadcasting is information transmitted to individual users. In some cases, it is difficult to provide information appropriate to the user's preferences or information appropriate to the situations to individual users.

In view of the situation as described above, the present disclosure provides a technology that can provide information that is more appropriate to the user's preference according to the situations at times without complicated operations such as active operations of the user. That is, the present disclosure proposes an example of a technology that enables each user to passively acquire information that is more personalized for the user.

<<2. Configuration>>

An example of the configuration of the information processing system according to the present embodiment is described below.

<2.1. System configuration>

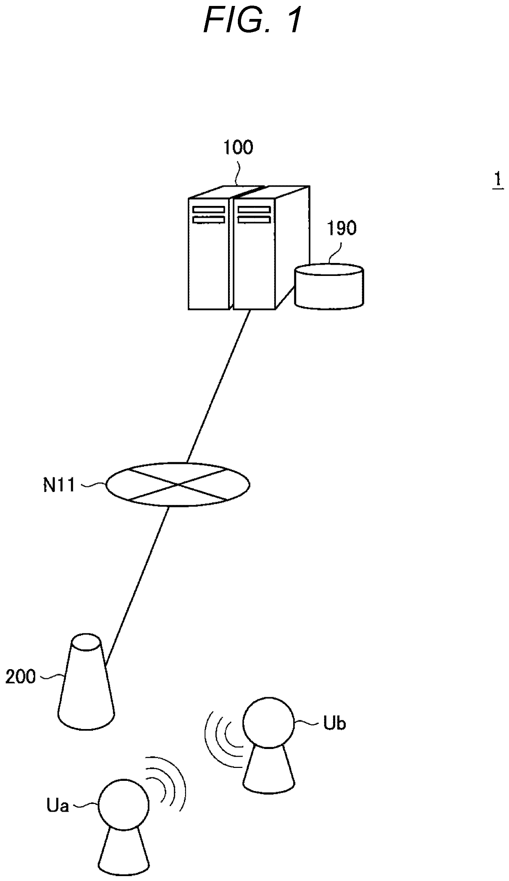

First, an example of a schematic system configuration of an information processing system according to an embodiment of the present disclosure is described with reference to Fig. 1. Fig. 1 is a diagram illustrating an example of a system configuration of an information processing system according to an embodiment of the present disclosure.

As illustrated in Fig. 1, an information processing system 1 according to the present embodiment includes an information processing apparatus 100 and a terminal apparatus 200. Furthermore, the information processing system 1 may include a storage unit 190. The information processing apparatus 100 and the terminal apparatus 200 are connected to be capable of transmission and reception with respect to each other via a network N11. Note that the type of the network N11 is not particularly limited. As a specific example, the network N11 may be configured by a so-called wireless network such as a network based on various standards such as 3G, 4G, Wi-Fi (registered trademark), and Bluetooth (registered trademark). Furthermore, the network N11 may be configured by the Internet, a dedicated line, a local area network (LAN), a wide area network (WAN), and the like. Furthermore, the network N11 may include a plurality of networks, and at least part of the network N11 may be configured as a wired network.

The terminal apparatus 200 includes a sound collection unit such as a microphone, and is capable of collecting an acoustic sound of the surrounding environment. For example, the terminal apparatus 200 collects voices uttered by users Ua and Ub who are located around the terminal apparatus 200 and are talking to each other. The terminal apparatus 200 transmits voice data (in other words, acoustic data) corresponding to voice collection results to the information processing apparatus 100 connected via the network N11. Furthermore, the terminal apparatus 200 receives various pieces of content from the information processing apparatus 100. For example, the terminal apparatus 200 may acquire content related to a keyword uttered by the user included in the voice data from the information processing apparatus 100 as a response to the voice data transmitted to the information processing apparatus 100.

Furthermore, the terminal apparatus 200 includes an output interface for presenting various types of information to the user. As a specific example, the terminal apparatus 200 may include an acoustic output unit such as a speaker to output voice or acoustic sound via the acoustic output unit to present desired information to the user. With such a configuration, for example, the terminal apparatus 200 can also present the user, via the acoustic output unit, with a voice or an acoustic sound corresponding to the content acquired from the information processing apparatus 100. As a more specific example, in a case where the terminal apparatus 200 acquires content such as a document including character information to be presented to the user, the terminal apparatus 200 may synthesize a voice corresponding to the character information on the basis of a technology, e.g., Text to Speech, and output the voice.

Furthermore, as another example, the terminal apparatus 200 may include a display unit such as a display, and cause display information, e.g., image (for example, a still image or a moving image) to be displayed on the display unit so as to present desired information to the user. With such a configuration, for example, the terminal apparatus 200 can also present display information corresponding to the content acquired from the information processing apparatus 100 to the user via the display unit.

The information processing apparatus 100 acquires various information acquired by the terminal apparatus 200 from the terminal apparatus 200. As a specific example, the information processing apparatus 100 may collect acoustic data according to a result of collection of acoustic sound of the surrounding environment by the terminal apparatus 200 (for example, voice data according to a result of collection of the voice uttered by a user located around the terminal apparatus 200) from the terminal apparatus 200.

The information processing apparatus 100 analyzes the information acquired from the terminal apparatus 200 to extract keywords included in the information. As a specific example, the information processing apparatus 100 performs so-called voice analysis processing on voice data (acoustic data) acquired from the terminal apparatus 200 to convert the voice data into character information. Furthermore, the information processing apparatus 100 performs analysis processing based on so-called natural language processing technology such as morphological analysis, lexical analysis, and semantic analysis on the character information so as to extract a desired keyword (e.g., a phrase corresponding to a noun) included in the character information.

The information processing apparatus 100 extracts content related to the extracted keyword from a desired content group. As a specific example, the information processing apparatus 100 may extract content related to the extracted keyword from a predetermined storage unit 190 (for example, a database and the like) in which data of various types of content is stored. Furthermore, as another example, the information processing apparatus 100 may extract content related to the extracted keyword from a predetermined network (that is, content scattered in various places may be acquired via the network). Then, the information processing apparatus 100 transmits the extracted content to the terminal apparatus 200. Note that in a case where a plurality of pieces of content is extracted, the information processing apparatus 100 may transmit at least some of the plurality of pieces of content to the terminal apparatus 200 according to a predetermined condition. In this case, for example, as described above, the terminal apparatus 200 may present information corresponding to the content transmitted from the information processing apparatus 100 to the user via a predetermined output interface.

Note that the system configuration of the information processing system 1 according to the present embodiment described above is merely an example, and as long as the functions of the terminal apparatus 200 and the information processing apparatus 100 described above are achieved, the system configuration of the information processing system 1 is not necessarily limited to the example illustrated in Fig. 1. As a specific example, the terminal apparatus 200 and the information processing apparatus 100 may be integrally configured. That is, in this case, an apparatus in which the terminal apparatus 200 and the information processing apparatus 100 are integrally configured may include the sound collection unit and collect an acoustic sound of the surrounding environment. Furthermore, the apparatus may execute processing related to keyword extraction and processing related to extraction of content related to the keyword on the basis of a result of collection of the acoustic sound.

Furthermore, as another example, some of the functions of the information processing apparatus 100 may be provided in another apparatus. As a specific example, among the functions of the information processing apparatus 100, the function related to extraction of a keyword from the voice data or the like may be provided in another apparatus (for example, the terminal apparatus 200 or an apparatus different from the information processing apparatus 100 and the terminal apparatus 200). Similarly, some of the functions of the terminal apparatus 200 may be provided in another apparatus.

Furthermore, each function of the information processing apparatus 100 may be achieved by a plurality of apparatuses operating in cooperation. As a more specific example, each function of the information processing apparatus 100 may be provided by a virtual service (for example, a cloud service) achieved by cooperation of a plurality of apparatuses. In this case, the service corresponds to the information processing apparatus 100 described above. Similarly, each function of the terminal apparatus 200 may also be achieved by a plurality of apparatuses operating in cooperation.

Heretofore, an example of a schematic system configuration of the information processing system according to an embodiment of the present disclosure has been described with reference to Fig. 1.

<2.2. Function configuration>

Subsequently, an example of a function configuration of each apparatus constituting the information processing system according to the present embodiment will be described.

(Configuration example of terminal apparatus 200)

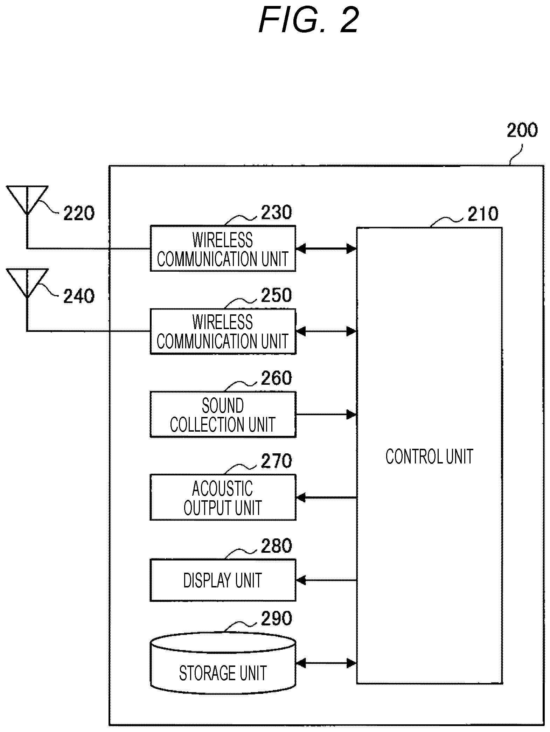

First, an example of a function configuration of the terminal apparatus 200 according to the present embodiment will be described with reference to Fig. 2. Fig. 2 is a block diagram illustrating an example of a function configuration of the terminal apparatus 200 according to the present embodiment.

As illustrated in Fig. 2, the terminal apparatus 200 includes an antenna unit 220 and a wireless communication unit 230, a sound collection unit 260, an acoustic output unit 270, a storage unit 290, and a control unit 210. Furthermore, the terminal apparatus 200 may include an antenna unit 240 and a wireless communication unit 250. Furthermore, the terminal apparatus 200 may include a display unit 280.

The antenna unit 220 and the wireless communication unit 230 are configured for the terminal apparatus 200 to communicate with a base station via a wireless network based on a standard such as 3G and 4G. The antenna unit 220 radiates a signal output from the wireless communication unit 230 into space as a radio wave. Furthermore, the antenna unit 220 converts the radio wave in the space into a signal and outputs the signal to the wireless communication unit 230. Furthermore, the wireless communication unit 230 transmits and receives signals to and from the base station. For example, the wireless communication unit 230 may transmit an uplink signal to the base station and may receive a downlink signal from the base station. With such a configuration, the terminal apparatus 200 can also be connected to a network such as the Internet on the basis of communication with the base station, for example, and can eventually transceive information with respect to the information processing apparatus 100 via the network.

The antenna unit 240 and the wireless communication unit 250 are configured for the terminal apparatus 200 to perform communication via a wireless network with another apparatus (e.g., a router and other terminal apparatuses or the like) positioned in a relatively close proximity on the basis of standards such as Wi-Fi (registered trademark) and Bluetooth (registered trademark). That is, the antenna unit 240 radiates the signal output from the wireless communication unit 250 as a radio wave to the space. Furthermore, the antenna unit 240 converts a radio wave in the space into a signal and outputs the signal to the wireless communication unit 250. Furthermore, the wireless communication unit 250 transceives signals with respect to other apparatuses. With such a configuration, the terminal apparatus 200 can also be connected to a network such as the Internet via another apparatus such as a router, for example, and can eventually transceive information with respect to the information processing apparatus 100 via the network. Furthermore, the terminal apparatus 200 communicates with another terminal apparatus, so that the terminal apparatus 200 can be connected to a network such as the Internet via the other terminal apparatus (that is, as the other terminal apparatus relays communication).

The sound collection unit 260 can be configured as a sound collection device for collecting an acoustic sound of the external environment (that is, acoustic sound that propagates through the external environment) like a so-called microphone. The sound collection unit 260 collects, for example, a voice uttered by a user located around the terminal apparatus 200, and outputs voice data corresponding to an acoustic signal based on the sound collection result (that is, acoustic data) to the control unit 210.

The acoustic output unit 270 includes a sounding body such as a speaker, and converts an input drive signal (acoustic sound signal) into an acoustic sound and outputs it. For example, the acoustic output unit 270 may output a voice or an acoustic sound corresponding to information (for example, content) to be presented to the user on the basis of control from the control unit 210.

The display unit 280 is configured by a display or the like, and presents various types of information to the user by displaying display information such as an image (for example, a still image or a moving image). For example, the display unit 280 may output a still image or a moving image according to information (for example, content) to be presented to the user on the basis of the control from the control unit 210.

The storage unit 290 is a storage area for temporarily or permanently storing various data. For example, the storage unit 290 may store data for the terminal apparatus 200 to execute various functions. As a specific example, the storage unit 290 may store data (for example, a library) for executing various applications, management data for managing various settings, and the like. Furthermore, the storage unit 290 may store data of various types of content (for example, content transmitted from the information processing apparatus 100) temporarily or permanently.

The control unit 210 controls various operations of the terminal apparatus 200. For example, the control unit 210 may acquire voice data corresponding to the sound collection result by the sound collection unit 260 from the sound collection unit 260, and control the wireless communication unit 230 or 250 to transmit the acquired voice data to the information processing apparatus 100 via a predetermined network.

Furthermore, the control unit 210 may acquire content transmitted from the information processing apparatus 100 via a predetermined network by controlling the operation of the wireless communication unit 230 or 250, and output a voice or an acoustic sound corresponding to the acquired content to the acoustic output unit 270. Note that, at this time, the control unit 210 may synthesize a voice corresponding to the character information included in the acquired content on the basis of a technology such as Text to Speech and cause the acoustic output unit 270 to output the voice. Furthermore, the control unit 210 may cause the display unit 280 to display display information such as a still image or a moving image according to the acquired content.

Note that the configuration of the terminal apparatus 200 described above is merely an example, and does not necessarily limit the configuration of the terminal apparatus 200. For example, the terminal apparatus 200 may be connectable to a network such as the Internet via a wired network. In this case, the terminal apparatus 200 may have a communication unit for accessing the network. Furthermore, depending on a function that can be executed, the terminal apparatus 200 may include a configuration corresponding to the function.

Heretofore, an example of the function configuration of the terminal apparatus 200 according to the present embodiment has been described with reference to Fig. 2.

(Configuration example of information processing apparatus 100)

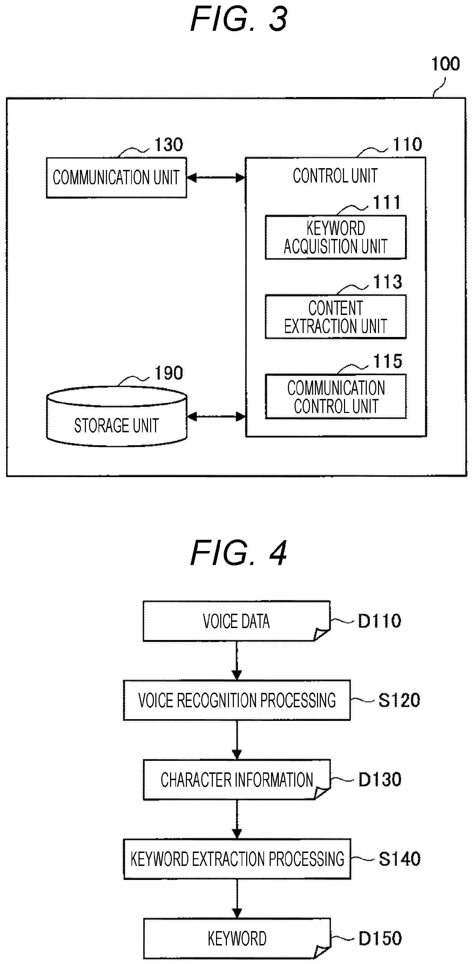

Next, an example of the a function configuration of the information processing apparatus 100 according to the present embodiment is described with reference to Fig. 3. Fig. 3 is an explanatory diagram for explaining an example of a function configuration of the information processing apparatus 100 according to the present embodiment.

As illustrated in Fig. 3, the information processing apparatus 100 includes a communication unit 130, a storage unit 190, and a control unit 110.

The communication unit 130 is a configuration for each configuration of the information processing apparatus 100 to access a predetermined network and transceive information with respect to another apparatus. Note that the type of network accessed by the information processing apparatus 100 is not particularly limited. Therefore, the configuration of the communication unit 130 may be changed as appropriate according to the type of the network. For example, in a case where the information processing apparatus 100 accesses a wireless network, the communication unit 130 may include configurations corresponding to the antenna unit 220 and the wireless communication unit 230 or the antenna unit 240 and the wireless communication unit 250 described with reference to Fig. 2. Furthermore, in a case where the information processing apparatus 100 accesses a wired network, the communication unit 130 may include a configuration for accessing the wired network. With such a configuration, the information processing apparatus 100 can be connected to a network such as the Internet, and can eventually transceive information with respect to another apparatus (for example, the terminal apparatus 200) via the network.

The storage unit 190 is a storage area for temporarily or permanently storing various data. For example, the storage unit 190 may store data for the information processing apparatus 100 to execute various functions. As a specific example, the storage unit 190 may store data (for example, a library) for executing various applications, management data for managing various settings, and the like. Furthermore, the storage unit 190 may store data of various content temporarily or permanently.

The control unit 110 controls various operations of the information processing apparatus 100. For example, the control unit 110 includes a keyword acquisition unit 111, a content extraction unit 113, and a communication control unit 115.

The communication control unit 115 controls communication with another apparatus via a predetermined network. For example, the communication control unit 115 controls the communication unit 130 to acquire data (for example, voice data) transmitted from another apparatus (for example, the terminal apparatus 200). Furthermore, the communication control unit 115 transmits various data (for example, content) to another apparatus via a predetermined network. Note that the communication control unit 115 corresponds to an example of an "output control unit".

The keyword acquisition unit 111 acquires keywords included as character information in various data. For example, the keyword acquisition unit 111 may perform voice analysis processing on the voice data according to the result of collection of the voice uttered by the user from the terminal apparatus 200 to convert it to the character information, and extract keywords on the basis of a predetermined condition from the character information. In this case, in the keyword acquisition unit 111, a part that converts the voice data into the character information corresponds to an example of a "conversion unit", and a part that extracts a keyword from the character information corresponds to an example of an "acquisition unit". Furthermore, as another example, the keyword acquisition unit 111 may acquire a keyword extracted from the voice data by another apparatus from the other apparatus. In this case, the keyword acquisition unit 111 corresponds to an example of "acquisition unit". Then, the keyword acquisition unit 111 outputs the acquired keyword to the content extraction unit 113. Note that details of the processing of acquiring a keyword on the basis of voice data will be described later.

The content extraction unit 113 acquires a keyword from the keyword acquisition unit 111, and extracts content related to the acquired keyword from a content group including one or more pieces of content. For example, the content extraction unit 113 may extract content related to the acquired keyword from the content group stored in the storage unit 190. Furthermore, at this time, the content extraction unit 113 may extract content that is more relevant to the acquired keyword. Furthermore, as another example, the content extraction unit 113 may access a predetermined network (e.g., a LAN and the like) and extract content related to the acquired keyword from the network (e.g., from various apparatuses connected via the network). Note that details regarding processing related to content extraction will be described later. Note that the content extracted by the content extraction unit 113 is transmitted to the terminal apparatus 200 via the predetermined network by the communication control unit 115, for example.

Note that the configuration of the information processing apparatus 100 described above is merely an example, and does not necessarily limit the configuration of the information processing apparatus 100. For example, a part of the configuration of the information processing apparatus 100 illustrated in Fig. 3 may be provided outside the information processing apparatus 100. As a specific example, the storage unit 190 may be provided outside the information processing apparatus 100. Furthermore, as another example, a part of the configuration of the keyword acquisition unit 111 and the content extraction unit 113 included in the control unit 110 may be provided in an apparatus different from the information processing apparatus 100. Furthermore, as another example, the functions of the information processing apparatus 100 may be achieved by a plurality of apparatuses operating in cooperation.

Heretofore, an example of the function configuration of the information processing apparatus 100 according to the present embodiment has been described with reference to Fig. 3.

<<3. Processing>>

Subsequently, an example of processing of the information processing system according to the present embodiment will be described.

<3.1. Keyword extraction based on voice data>

First, an example of a flow of processing in which the information processing apparatus 100 extracts keywords on the basis of voice data according to a result of collection of a sound such as a voice uttered by the user will be described. Note that in this description, for the sake of convenience, the information processing apparatus 100 (for example, the keyword acquisition unit 111) extracts keywords on the basis of voice data acquired from the terminal apparatus 200 (that is, voice data based on a result of collection of a sound by the terminal apparatus 200).

For example, Fig. 4 is an explanatory diagram for explaining an example of a schematic processing flow related to keyword extraction by the information processing apparatus 100 according to the present embodiment.

As illustrated in Fig. 4, first, the information processing apparatus 100 performs so-called voice recognition processing on voice data D110 acquired from the terminal apparatus 200, thereby converting the voice data D110 into character information D130 (S120). Next, the information processing apparatus 100 performs so-called natural language processing on the character information D130 to extract the keyword D150 from the character information D130 on the basis of a predetermined condition.

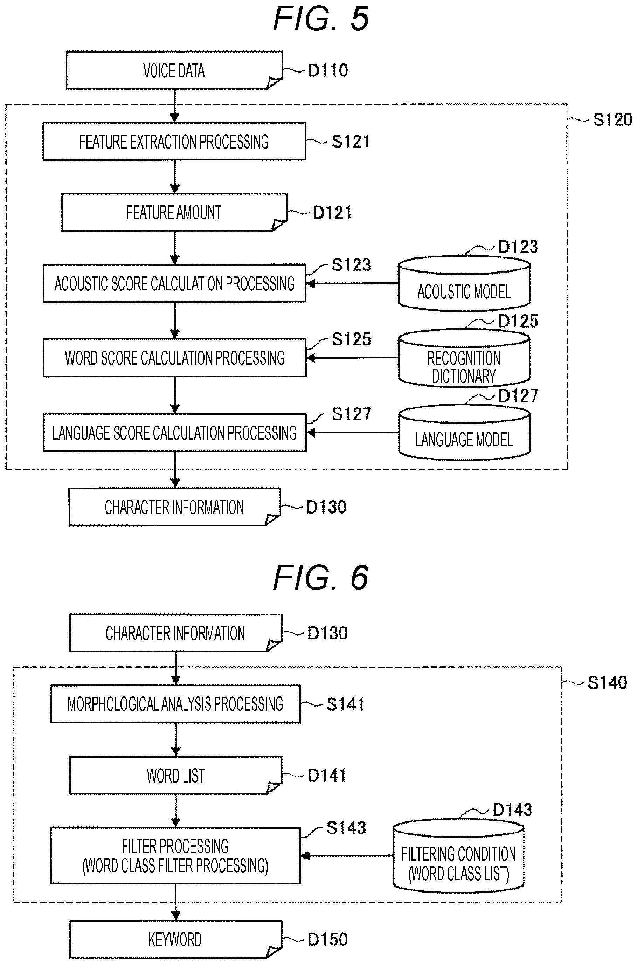

Next, an example of the voice recognition processing indicated by reference numeral S120, which is part of the various processing of the information processing apparatus 100 described with reference to Fig. 4 will be described in more detail with reference to Fig. 5. Fig. 5 is an explanatory diagram for explaining an example of the voice recognition processing performed by the information processing apparatus 100 according to the present embodiment.

As illustrated in Fig. 5, the information processing apparatus 100 first performs various acoustic analyses on the acquired voice data D110 to extract a predetermined feature amount D121 related to voice recognition (S121). As the feature amount for recognizing the voice, for example, mel-frequency cepstral coefficients (MFCC) or the like is used.

Next, the information processing apparatus 100 performs scoring of candidates recognized as a voice by comparing the feature amount D121 extracted from the voice data D110 with an acoustic model D123 (S123). Furthermore, the information processing apparatus 100 scores which word the recognized voice corresponds to on the basis of a recognition dictionary D125 (S125). Note that, at this point, a homonym, a word uttered with a similar sound, and the like are mixed. Therefore, the information processing apparatus 100 scores those that are highly likely to be words on the basis of a language model D127. Through the processing described above, the information processing apparatus 100 converts the voice data D110 into the character information D130 by adopting the word with the highest score.

Next, an example of processing related to keyword extraction indicated by reference numeral S140, which is part of the various processing of the information processing apparatus 100 described with reference to Fig. 4 will be described in more detail with reference to Fig. 6. Fig. 6 is an explanatory diagram for explaining an example of processing related to keyword extraction by the information processing apparatus 100 according to the present embodiment.

As illustrated in Fig. 6, the information processing apparatus 100 first performs processing called morphological analysis on the character information D130 to divide the character information D130 into morphemes. In general, as the morphological analysis, three types of processing "division into words", "conjugated word processing", and "word class determination" are mainly performed. Note that as the morphological analysis processing, a known technique can be applied, and thus a detailed description is omitted. Thus, the information processing apparatus 100 generates a word list D141 by dividing the character information D130 into morphemes (S141).

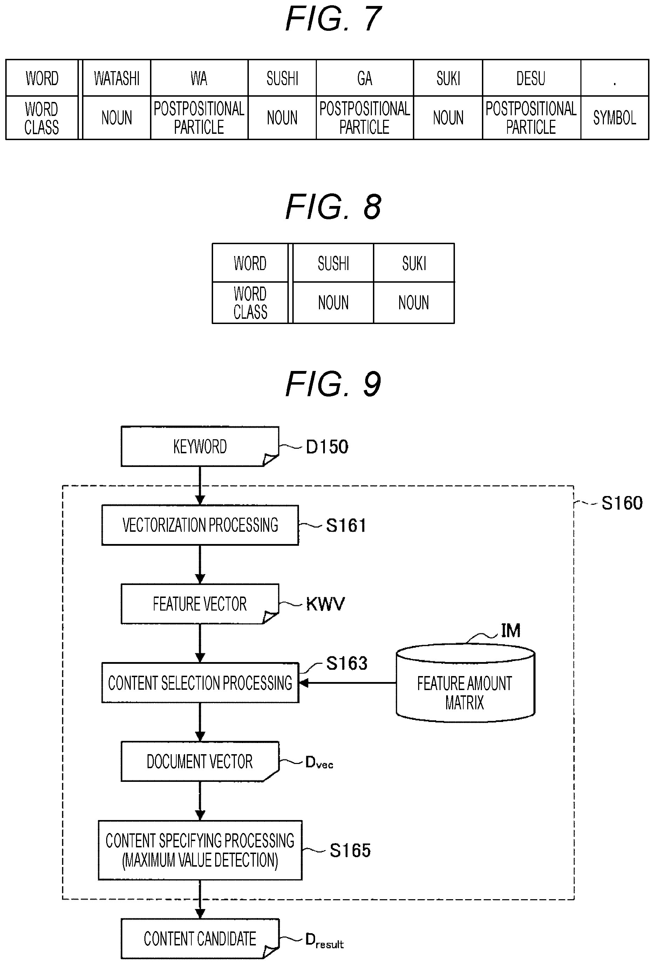

Here, with reference to Fig. 7, an example of the result of the morphological analysis processing will be described by way of a specific example. Fig. 7 is an explanatory diagram for explaining an example of a result of the morphological analysis processing. For example, it is assumed that the input character information D130 is a sentence "Watashi wa sushi ga suki desu (I like sushi)". In this case, the word list D141 obtained from the character information D130 is as illustrated in Fig. 7.

Subsequently, the information processing apparatus 100 extracts at least some words from the word list D141 as keywords D150 on the basis of a predetermined filtering condition D143 (S143). As a specific example, the information processing apparatus 100 may extract a word corresponding to a predetermined word class such as a noun from the word list D141 as a keyword. Furthermore, at this time, the information processing apparatus 100 may exclude a common word such as "watashi (I)", "anata (you)", and "boku (I)", i.e., words (stop words) that have no more characteristic meaning than other nouns, from extraction targets also in a case where only nouns are extracted from the word list D141. For example, Fig. 8 is an explanatory diagram for explaining an example of the keyword extraction result, and illustrates an example of the keyword D150 extracted from the word list D141 illustrated in Fig. 7.

As described above, with reference to Figs. 4 to 8, an example of the flow of processing in which the information processing apparatus 100 extracts keywords on the basis of the voice data corresponding to a result of collection of a sound such as a voice uttered by the user has been described.

<3.2. Extraction of content related to keywords>

Next, an example of processing in which the information processing apparatus 100 extracts at least some content related to a keyword from a content group including one or more pieces of content will be described. Note that, in this description, for the sake of convenience, it is assumed that each content is stored in the storage unit 190 described with reference to Figs. 1 and 3. Furthermore, in the present description, it is assumed that documents according to various topics are stored as content that are candidates for extraction so that the technical features of the information processing system according to the present embodiment are easier to understand. That is, the information processing apparatus 100 (for example, the content extraction unit 113) extracts at least some content related to the keyword D150 from the content group stored in the storage unit 190 (that is, a document group corresponding to various topics). Furthermore, hereinafter, the storage unit 190 is configured as a database, and in particular, a database for managing a series of content (that is, the content group) is also referred to as a "content database". Furthermore, in the following description, in order to make the technical features of the information processing apparatus 100 according to the present disclosure easier to understand, the description is given focusing on the case where the information processing apparatus 100 extracts a document as the content.

(Registration of content in the content database)

First, an example of processing for registering content in the content database so that the information processing apparatus 100 can extract the content related to the keyword D150 will be described.

The information processing apparatus 100 performs morphological analysis on the character information such as sentences included in various content collected through various networks such as the Internet, thereby dividing the character information into words (morphemes). Next, the information processing apparatus 100 calculates a feature amount for each content on the basis of words divided from character information included in the content. Note that, for example, term frequency-inverse document frequency (TF-IDF) or the like is used as the feature amount. Note that TF-IDF is represented by the relational expression indicated as (Expression 1) below.

[Math. 1]

$$tf\text{-}idf(t,d) = tf(t,d) \times idf(t,d) \quad \ldots \text{ (Expression 1)}$$

In (Expression 1), a variable t indicates a word, and a variable d indicates a document (in other words, each content). Furthermore, tf(t,d) indicates the appearance frequency of the word t, and idf(t,d) indicates a reciprocal number of df (that is, the inverse document frequency) that is the number of documents d in which the word t appears. The terms tf(t,d) and idf(t,d) are respectively expressed by the relational expressions indicated as (Expression 2) and (Expression 3) below.

[Math. 2]

$$tf(t,d) = \frac{n}{N} \qquad \ldots \text{(Expression 2)}$$

$$idf(t,d) = \log \frac{D}{1 + df(t,d)} \qquad \ldots \text{(Expression 3)}$$

In the above (Expression 2) and (Expression 3), a variable n indicates the number of appearances of the word t in the document d. Furthermore, a variable N indicates the number of all words in the document d. Furthermore, a variable D indicates the total number of documents to be processed (for example, documents to be extracted). Furthermore, df(t,d) indicates the total number of documents including the word t. That is, tf(t,d) corresponds to a value obtained by dividing the number of times a certain word t appears in a certain document d by the number of all words in the document d. Furthermore, idf(t,d) is calculated on the basis of the reciprocal of df(t,d) indicating the total number of documents including the word t. From such characteristics, the TF-IDF has a characteristic of indicating a larger numerical value for words appearing at a higher frequency only in a certain document d in terms of the whole set of documents.

Here, the feature amount using TF-IDF will be described below with a specific example. For example, it is assumed that the following three documents are held in the content database (for example, the storage unit 190) as extraction targets.

(#1) Good sushi and beer restaurants where sushi lovers gather
(#2) Sushi is booming overseas
(#3) Beer event held in Ginza

When TF-IDF is calculated on the basis of the above documents #1 to #3, a feature amount matrix IM indicated as (Expression 4) below can be obtained.
[Math. 3]

$$IM = \begin{array}{c} \\ \text{Sushi} \\ \text{Beer} \\ \text{Event} \\ \text{Boom} \\ \text{Like} \\ \text{Restaurant} \\ \text{Overseas} \\ \text{Feature} \\ \text{Ginza} \\ \text{Held} \end{array} \begin{array}{c} \#1 \quad\quad \#2 \quad\quad \#3 \\ \begin{bmatrix} 0.3847 & 0.2525 & 0 \\ 0.1924 & 0 & 0.2084 \\ 0 & 0 & 0.5647 \\ 0 & 0.6842 & 0 \\ 0.5212 & 0 & 0 \\ 0.5212 & 0 & 0 \\ 0 & 0.6842 & 0 \\ 0.5212 & 0 & 0 \\ 0 & 0 & 0.5647 \\ 0 & 0 & 0.5647 \end{bmatrix} \end{array}$$

$$\ldots \text{(Expression 4)}$$

(Extraction of content from content database)

Next, an example of processing in which the information processing apparatus 100 extracts content related to the keyword D150 from the content database will be described. For example, Fig. 9 is an explanatory diagram for explaining an example of processing related to content extraction by the information processing apparatus 100 according to the present embodiment. Note that, in the following, an example of processing of the information processing apparatus 100 is described by focusing on the case where the documents #1 to #3 described above are registered in the content database and the information processing apparatus 100 extracts at least some of the documents from the content database.

As illustrated in Fig. 9, when the information processing apparatus 100 acquires the keyword D150 corresponding to a result of collection of a sound such as a voice uttered by the user, the information processing apparatus 100 calculates a feature vector KWV on the basis of the keyword D150 (S161).

For example, as in the example described with reference to Figs. 7 and 8, it is assumed that the user utters "Watashi wa sushi ga suki desu (I like sushi)" and "sushi" and "suki" are acquired as keywords. In this case, the feature vector KWV corresponding to the relationship between the keywords extracted from the utterance and the words included in the documents #1 to #3 is expressed by a vector indicated as (Expression 5) below.

[Math. 4]

$$
\begin{array}{ccccccccccc}
 & \text{Sushi} & \text{Beer} & \text{Event} & \text{Boom} & \text{Like} & \text{Restaurant} & \text{Overseas} & \text{Feature} & \text{Ginza} & \text{Held} \\
KWV = [ & 1 & 0 & 0 & 0 & 1 & 0 & 0 & 0 & 0 & 0 & ]
\end{array}
$$

... (Expression 5)

Next, the information processing apparatus 100 calculates the document vector $D_{vec}$ on the basis of the feature vector KWV calculated on the basis of the keyword and the feature amount matrix IM based on the document group registered in the database (S163). The document vector $D_{vec}$ is a feature amount that quantitatively indicates the relationship between the acquired keyword and each document registered in the database.

Specifically, the document vector $D_{vec}$ can be expressed by the product of the feature vector KWV and the feature amount matrix IM. For example, a document vector $D_{vec}$ corresponding to the relationship between the keyword illustrated in Fig. 8 and each of the documents described above as #1 to #3 is expressed by a vector indicated as (Expression 6) below.

[Math. 5]

$$D_{vec} = KWV \times IM$$

$$
\begin{array}{ccc}
\#1 & \#2 & \#3
\end{array}
$$

$$= \begin{bmatrix} 0.9059 & 0.2525 & 0 \end{bmatrix} \quad \text{... (Expression 6)}$$

Next, the information processing apparatus 100 extracts a document $D_{result}$ that is more relevant to the acquired keyword from the document group registered in the database on the basis of the calculated document vector $D_{vec}$ (S165).

As a specific example, the information processing apparatus 100 may extract a document indicating a larger coefficient from the documents #1 to #3 on the basis of the relational expression indicated as (Expression 7) below so as to extract the document $D_{result}$ most relevant to the content uttered by the user. Note that, in this case, document #1 is extracted.

[Math. 6]

$$D_{result} = \max(D_{vec}) \quad \text{... (Expression 7)}$$

As described above, with reference to Fig. 9, an example of processing for extracting at least some content related to a keyword from a content group including one or more pieces of content has been described. Note that the above-described processing is merely an example, and the processing related to content extraction by the information processing apparatus 100 is not necessarily limited. That is, as long as the information processing apparatus 100 can extract content related to a keyword from a content group including one or more pieces of content according to a feature amount based on character information included in each content, the method is not particularly limited.

<3.3. Presentation of information according to content extraction results>

Next, an example of processing for presenting information corresponding to a result of content extraction based on a keyword to the user will be described. Note that, in this description, it is assumed that the information processing apparatus 100 extracts a document as content, as in the above example.

When the information processing apparatus 100 extracts the document $D_{result}$ from the database on the basis of the acquired keyword, the information processing apparatus 100 controls the information corresponding to the doc-

ument $D_{result}$ to be presented to the user via the terminal apparatus 200.

As a specific example, the information processing apparatus 100 may transmit the document $D_{result}$ itself or at least a part of character information included in the document $D_{result}$ to the terminal apparatus 200 as topic data. In this case, for example, the terminal apparatus 200 may present the topic data (character information) to the user via the display unit 280 such as a display. Furthermore, as another example, the terminal apparatus 200 may convert the topic data (character information) into voice data, and output the voice based on the voice data via the acoustic output unit 270 such as a speaker so as to present information corresponding to the topic data to the user.

Furthermore, as another example, the information processing apparatus 100 may convert at least a part of character information included in the document $D_{result}$ into voice data, and transmit the voice data to the terminal apparatus 200 as topic data. In this case, for example, the terminal apparatus 200 may output a sound based on the topic data (voice data) via the acoustic output unit 270 such as a speaker to present information corresponding to the topic data to the user.

Note that the information processing apparatus 100 may extract a plurality of pieces of content on the basis of the acquired keyword. In this case, for example, the terminal apparatus 200 may present a list of content extracted by the information processing apparatus 100 to the user and present the content selected by the user to the user.

As a specific example, when the terminal apparatus 200 acquires a content extraction result (for example, topic data) from the information processing apparatus 100, the terminal apparatus 200 may output display information, an acoustic sound, and the like via the display unit 280 or the acoustic output unit 270 so as to notify the user of the fact that the topic information can be browsed.

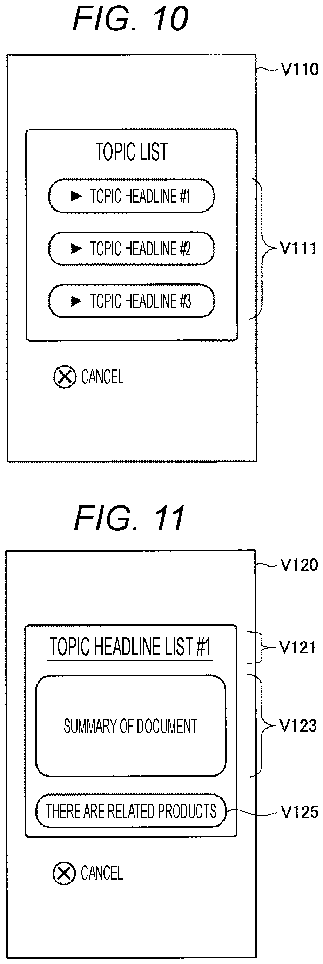

For example, Fig. 10 is an explanatory diagram for explaining an example of a user interface (UI) of the terminal apparatus 200 according to the present embodiment, and indicates an example of information to be given notice to the user via the display unit 280. Specifically, in the example illustrated in Fig. 10, the terminal apparatus 200 presents a display screen V110 displaying a content list V111 based on topic data acquired from the information processing apparatus 100 (that is, a content list extracted by the information processing apparatus 100). At this time, the terminal apparatus 200 may present the list V111 to the user so that each topic (in other words, content) presented in the list V111 can be selected.

Note that the interface for selecting content presented as the list V111 is not particularly limited. For example, a desired topic may be selected by voice input, or a desired topic may be selected by an operation via an input device such as a touch panel. Furthermore, in a case where the user is not interested in the topics presented as the list V111, an interface (for example, a cancel button or the like) for switching the screen may be presented.

Furthermore, the terminal apparatus 200 may present information (for example, content) corresponding to the topic to the user in response to selection of the topic by the user from the list V111.

For example, Fig. 11 is an explanatory diagram for explaining an example of the UI of the terminal apparatus 200 according to the present embodiment, and illustrates an example of information presented to the user via the display unit 280 in response to selection of the topic by the user. Specifically, in the example illustrated in Fig. 11, the terminal apparatus 200 presents a display screen V120 presenting, as information related to the topic selected by the user, information V121 indicating the headline of the selected topic and information V123 indicating the summary of content (for example, document) corresponding to the topic.

Note that, as described above, the aspect of presentation of information (for example, a document) according to topic data by the terminal apparatus 200 is not particularly limited. For example, the terminal apparatus 200 may present information corresponding to the topic data to the user by causing the display unit 280 to display character information corresponding to the topic data. Furthermore, as another example, the terminal apparatus 200 may present information corresponding to the topic data to the user by causing the acoustic output unit 270 to output a sound corresponding to the topic data. Furthermore, in this case, the processing of converting the character information included in the document corresponding to the topic data into the voice data may be executed by the terminal apparatus 200 or may be executed by the information processing apparatus 100.

Furthermore, the terminal apparatus 200 may present information related to the topic upon selection of the topic by the user. For example, in the example illustrated in Fig. 11, the terminal apparatus 200 presents information V125 (for example, a link) for referring to related products as information related to the topic selected by the user. In this case, for example, as information stored in the content database, in addition to data related to topics such as content, it is sufficient if other data related to data related to the topics (for example, data related to products) is stored. With such a configuration, for example, the information processing apparatus 100 may associate the information related to the extracted content with the extracted content and transmit the information to the terminal apparatus 200. Furthermore, the information processing apparatus 100 may acquire information associated with the topic selected by the user from the terminal apparatus 200 and transmit other information related to the content corresponding to the topic to the terminal apparatus 200. With such a configuration, the terminal apparatus 200 can present other information related to the topic selected by the user to the user.

Note that, as information related to the content corresponding to the topic, a plurality of pieces of information may be associated with the content. In this case, in a case where the presentation of information related to the topic is commanded by the user on the basis of an operation via the input device or voice input, the terminal apparatus 200 may present the list of information associated with the content corresponding to the topic to the user.

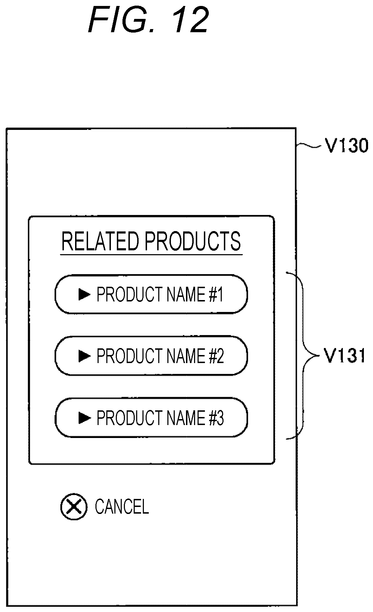

For example, Fig. 12 is an explanatory diagram for explaining an example of the UI of the terminal apparatus 200 according to the present embodiment, illustrating an example of information related to the topic selected by the user that is presented to the user via the display unit 280. Specifically, in the example illustrated in Fig. 12, the terminal apparatus 200 presents a display screen V130 presenting, as information related to the topic selected by the user, a list V131 of products related to content corresponding to the topic.

As a more specific example, it is assumed that a document "Good sushi and beer restaurants where sushi lovers gather" is selected as a topic related to the result of collection of the voice uttered by the user. As products related to this document, for example, products described below may be presented in the list V131.

(1) Book "Good sushi restaurants in Tokyo"
(2) Book "world beer"
(3) Coupon "Free beer ticket (Edo-mae sushi chain)"

Furthermore, in a case where at least some of the products presented in the list V131 are selected by the user, the terminal apparatus 200 may present information related to the selected product to the user. Furthermore, the terminal apparatus 200 may start processing (procedure) related to the purchase of a product in a case where at least some of the products presented in the list V131 is selected by the user. Note that a method for selecting a product presented in the list V131 is not particularly limited, and, for example, the selection may be performed by voice input, or the selection may be performed by an operation via an input device such as a touch panel.

Heretofore, an example of the processing of presenting information corresponding to the result of content extraction based on the keyword to the user has been described with reference to Figs. 10 to 12.

<3.4. Supplement>

Heretofore, an example of the information processing system according to the present embodiment has been described. On the other hand, the above is merely an example, and as long as the functions of the information processing apparatus 100 and the terminal apparatus 200 described above can be achieved, the subject of the processing for achieving the functions and the specific content of the processing are not particularly limited. Therefore, as a supplement, another example of the configuration, the operation, and the like of the information processing system according to the present embodiment will be described below.

For example, the terminal apparatus 200 may execute the processing of converting the voice data based on the result of collection of a voice uttered by the user into character information and the processing of extracting a keyword from the character information. In this case, the information processing apparatus 100 may acquire a keyword used for content extraction from the terminal apparatus 200.

Furthermore, the terminal apparatus 200 may calculate a feature amount (for example, MFCC and the like) for converting the voice data into character information from the voice data based on the result of collection of a voice uttered by the user, and transmit information indicating the feature amount to the information processing apparatus 100. With such a configuration, it becomes difficult to specify the content uttered by the user from the information transmitted and received between the terminal apparatus 200 and the information processing apparatus 100, and, for example, it is also expected that the configuration provides an effect of protecting the user's privacy from malicious attacks such as eavesdropping.

Furthermore, the information processing system 1 (for example, the information processing apparatus 100) according to the present embodiment may estimate information associated with the attribute of the user on the basis of voice data or the like according to the result of collection of the voice uttered by the user, and use the information for content extraction or the like. As a specific example, information such as the user's age, sex, knowledge level, and the like can be estimated on the basis of information associated with the vocabulary used by the user, the characteristics of the user's biological body, and the like, specified or estimated according to the voice data. The information processing system 1 can also provide information associated with a topic more suitable for the user (for example, content) to the user by using such information regarding the attribute of the user, for example, for extracting content from the database.

Furthermore, in the above description, an example in which the information processing system 1 according to the present embodiment spontaneously estimates a topic provided to the user on the basis of information uttered by the user and the like has been mainly described with focusing on the example. On the other hand, in a case where the user actively makes an inquiry to the information processing system 1, the information processing system 1 may extract information associated with a topic that is more relevant to the content of the inquiry made by the user.

For example, it is assumed that the user makes an utterance asking "What is Edo-mae sushi?" with respect to the information processing system 1, and in response to the inquiry, the information processing system 1 presents the user with information associated with the explanation of Edo-mae sushi. Subsequently, it is assumed that in a conversation between users, one user utters "I like sushi". In this case, in a series of flows (for example, within a predetermined period), the keyword "sushi" is uttered twice. The feature vector KWV in this case is expressed by a vector indicated as (Expression 8) below.

[Math. 7]

$$KWV = \begin{bmatrix} \overset{Sushi}{2} & \overset{Beer}{0} & \overset{Event}{0} & \overset{Boom}{0} & \overset{Like}{1} & \overset{Restaurant}{0} & \overset{Overseas}{0} & \overset{Feature}{0} & \overset{Ginza}{0} & \overset{Held}{0} \end{bmatrix}$$

... (Expression 8)

Furthermore, regarding the document vector $D_{vec}$, in a case where the feature amount matrix IM is indicated by (Expression 4) described above, it is expressed by the vector indicated as (Expression 9) below on the basis of the feature vector KWV indicated in (Expression 8) above.

[Math. 8]

$$D_{vec} = KWV \times IM$$

$$= \begin{bmatrix} \overset{\#1}{1.291} & \overset{\#2}{0.5050} & \overset{\#3}{0} \end{bmatrix}$$

... (Expression 9)

That is, the numerical value of the document vector of the document #1 becomes larger, and the document #1 is extracted as a more appropriate topic. Furthermore, in a case where the user actively makes an inquiry, the information processing system 1 may perform control so that the weight of the keyword extracted from the utterance content of the user becomes larger. As a specific example, in a case where the user actively makes an inquiry, the information processing system 1 may change a numerical value to be added according to the number of keywords extracted from the utterance content of the user from "1" to "2". Such control makes it possible to provide the user with information associated with topics more in line with the user's intention.

<<4. Variation>>

Subsequently, a variation of the information processing system according to an embodiment of the present disclosure will be described. In the above-described embodiment, in a case where a plurality of users utters, keywords are extracted from the content uttered by the users, and information corresponding to the topic according to the keywords is presented. On the other hand, similarly, in a case where there is a plurality of users in the same place, not all of the plurality of users are talking with each other. For example, in a case where there are four users Uc to Uf, a situation in which the user Uc and the user Ud are talking and the user Ue and the user Uf are talking can be assumed. In this case, the topic of conversation in the group of the user Uc and the user Ud and the topic of conversation in the group of the user Ue and the user Uf are not necessarily the same. Therefore, in such a situation, for each conversation group, keywords are acquired and information (content) according to the keywords is provided, so that information associated with topics that are more relevant to the content of the conversation can be provided to each user. Therefore, as a variation, an example of a mechanism for the information processing system 1 according to an embodiment of the present disclosure to acquire a keyword for each conversation group and provide information (content) according to the keyword will be described.

(User grouping)

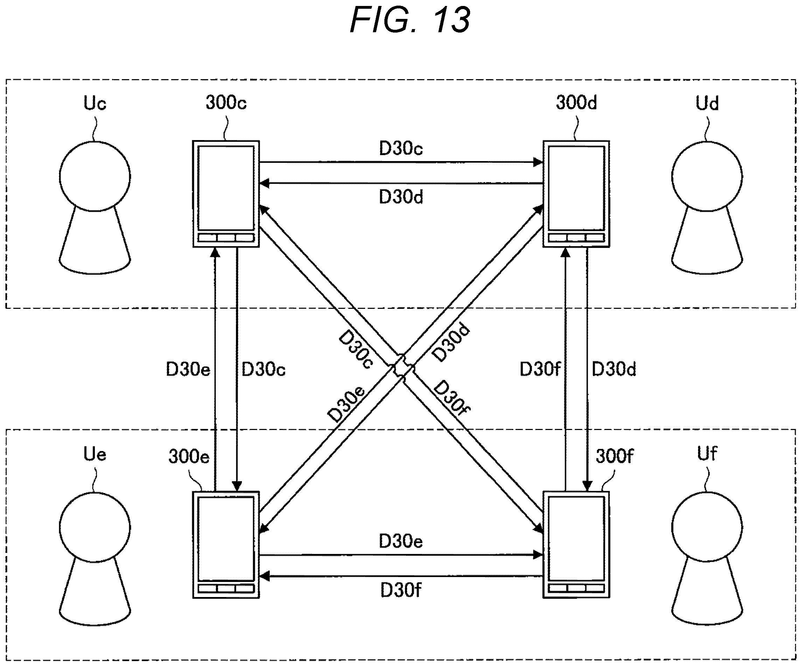

First, an example of a mechanism for grouping users (speakers) having a conversation with each other from a plurality of users will be described. For example, Fig. 13 is an explanatory diagram for explaining an example of a mechanism for grouping users in the information processing system according to a variation. Note that, in the example illustrated in Fig. 13, each of the users Uc to Uf holds a terminal apparatus 300 such as a smartphone, and the voice uttered by each user is collected by the terminal apparatus 300 held by the user. Note that, in Fig. 13, terminal apparatuses 300c, 300d, 300e, and 300f indicate the terminal apparatuses 300 held by the users Uc, Ud, Ue, and Uf, respectively.
Furthermore, in the example illustrated in Fig. 13, each of the terminal apparatuses 300c to 300f is communicably connected to another device (for example, another terminal apparatus 300) via short-range wireless communication based on a standard such as Bluetooth (registered trademark). Note that, in this description, it is assumed that the short-range wireless communication is communication based on the Bluetooth standard. The Bluetooth standard specifies a function (inquiry) that periodically searches for peripheral devices compliant with the standard and a function (inquiry scan) that transmits identification information (BTID: Bluetooth ID) in response to the search. The term "inquiry" is a master function, and "inquiry scan" is a slave function. Each of the terminal apparatuses 300c to 300f can appropriately switch master/slave and use the aforementioned "inquiry" and "inquiry scan" functions to obtain the BTIDs of other terminal apparatuses 300 located in the vicinity. For example, in Fig. 13, each piece of information indicated by reference numerals D30c, D30d, D30e, and D30f indicates identification information (BTID) of the terminal apparatuses 300c, 300d, 300e, and 300f, respectively.

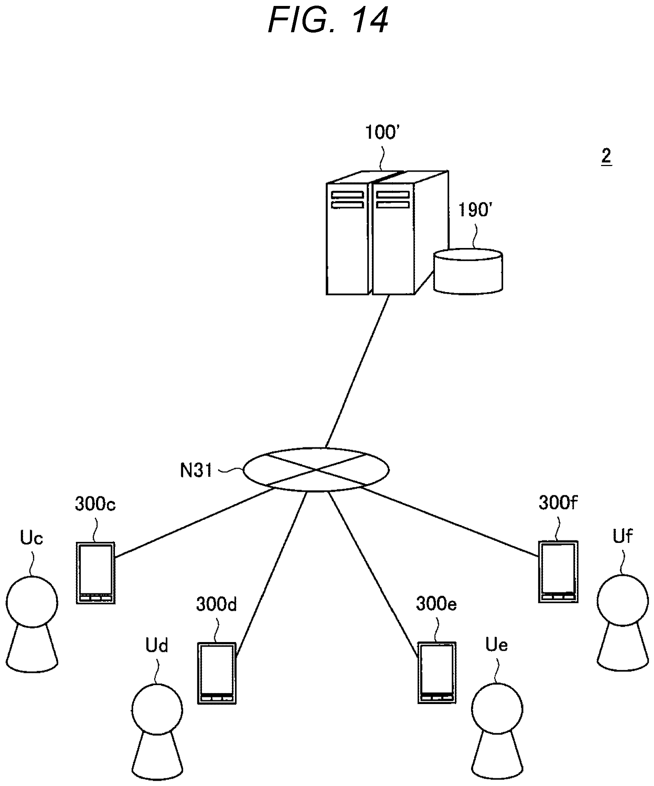

Next, an example of the system configuration of the information processing system according to the variation will be described with reference to Fig. 14. Fig. 14 is a diagram illustrating an example of a system configuration of the information processing system according to the variation. Note that, in the following description, the information processing system according to the variation may be referred to as "information processing system 2" in order to explicitly distinguish it from the information processing system 1 according to the above-described embodiment.

As illustrated in Fig. 14, the information processing system 2 according to the variation includes an information processing apparatus 100' and terminal apparatuses 300c to 300f. Furthermore, the information processing system 2 may include a storage unit 190'. The information processing apparatus 100' and each of the terminal apparatuses 300c to 300f are connected to each other via a network N31 so that information can be transmitted and received. Note that the information processing apparatus 100' and the storage unit 190' correspond respectively to the information processing apparatus 100 and the storage unit 190 in the information processing system 1 (see, for example, Fig. 1) according to the above-described embodiment. Furthermore, the network N31 corresponds to the network N11 in the information processing system 1 according to the above-described embodiment. Furthermore, the terminal apparatuses 300c to 300f correspond respectively to the terminal apparatuses 300c to 300f illustrated in Fig. 13. Note that, in the following description, the terminal apparatuses 300c to 300f are simply referred to as "terminal apparatus 300" unless otherwise distinguished. Furthermore, in this description, each configuration of the information processing system 2 will be described by focusing on a difference from the information processing system 1 according to the above-described embodiment (for example, a part related to user grouping), and a part substantially similar to the information processing system 1 will not be described in detail.

The terminal apparatus 300 includes a sound collection unit such as a microphone, and is capable of collecting a voice uttered by the user of its own. Furthermore, as described with reference to Fig. 13, the terminal apparatus 300 has a function of searching another terminal apparatus 300 located around itself, and acquires identification information (for example, BTID) of the other terminal apparatus 300 on the basis of the function. The terminal apparatus 300 transmits voice data corresponding to the result of collection of the voice and identification information of other terminal apparatuses 300 located in the vicinity to the information processing apparatus 100' via the network N31. As a specific example, the terminal apparatus 300c transmits the voice data corresponding to the result of collection of the voice of the user Uc and the identification information of each of the terminal apparatuses 300d to 300f located in the vicinity to the information processing apparatus 100' via the network N31. The similar applies to the terminal apparatuses 300d to 300f.

The information processing apparatus 100' acquires the voice data based on the result of collection of the voice uttered by the corresponding user (i.e., the users Uc to Uf) and identification information of other terminal apparatuses 300 located in the vicinity of the terminal apparatus 300 from each of the terminal apparatuses 300c to 300f. On the basis of the identification information of the other terminal apparatuses 300 located around the terminal apparatus 300 transmitted from each of the terminal apparatuses 300c to 300f, the information processing apparatus 100' can recognize that the terminal apparatuses 300c to 300f are in positions close to each other. That is, the information processing apparatus 100' can recognize that the respective users of the terminal apparatuses 300c to 300f, i.e., the users Uc to Uf, are in positions close to each other (in other words, share a place).

The information processing apparatus 100' performs analysis processing such as voice analysis or natural language processing on the voice data acquired from each of the terminal apparatuses 300c to 300f that have been recognized as being close to each other so as to evaluate "similarity" and "relevance" of utterance content indicated by each voice data.

Note that, in this description, the similarity of the utterance content indicates, for example, the relationship between sentences that indicate substantially the same content but different sentence expressions, such as the following two sentences.

(a) I like sushi.
(b) Sushi is my favorite food.

Furthermore, the relevance of the utterance content indicates the relationship between sentences (or words) having a certain relevance (for example, a conceptual relevance or a semantic relevance) although they indicate different objects. As a specific example, "sushi" and "tuna" are relevant in terms of a dish and its ingredients. Note that, in the following description, in order to further simplify the description, the "similarity" and the "relevance" are simply referred to as a "degree of similarity".

Here, the grouping processing by the information processing apparatus 100' will be described with a more specific example. Note that, in the example illustrated in Figs. 13 and 14, it is assumed that the user Uc and the user Ud are having a conversation and the user Ue and the user Uf are having a conversation.

For example, it is assumed that the user Uc and the user Ud have the following conversations.

- User Uc "I want to eat sushi".
- User Ud "There is a good restaurant in Ginza".

Furthermore, it is assumed that the user Ue and the user Uf exchange the following conversation in the same time zone.

- User Ue "Let's play soccer this weekend".
- User Uf "Actually, I prefer baseball".

The information processing apparatus 100' performs voice analysis processing on the voice data corresponding to each user to convert the voice data into the character information and performs natural language processing on the character information to evaluate the degree of similarity of the content uttered by the users. Note that, for example, a natural language processing tool called "word2vec" can be used for evaluating the degree of similarity the content uttered by the users. Of course, as long as it is possible to evaluate the degree of similarity, the content of the processing for that is not particularly limited. Furthermore, for the dictionary data applied to the evaluation of the degree of similarity, for example, articles on various networks such as the Internet may be used. Thus, it is possible to estimate a set (group) of users having a conversation by evaluating the degree of similarity of the content uttered by the users.

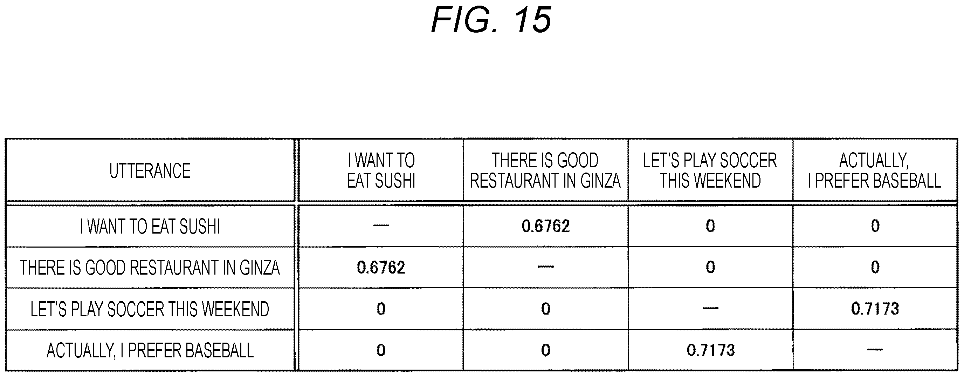

For example, Fig. 15 is an explanatory diagram for explaining an example of a result of processing related to user grouping in the information processing system according to the variation. In the example illustrated in Fig. 15, the results of the evaluation of the degree of similarity between the utterance content of the users Uc to Uf described above are indicated numerically. In the example illustrated in Fig. 15, the numerical value of the degree of similarity is set in the range of 0 to 1, and the higher the numerical value, the higher the degree of similarity. In the example illustrated in Fig. 15, the degree of similarity of the utterance content of the user Uc and the user Ud indicates "0.6762", and the degree of similarity of the utterance content of the user Ue and the user Uf indicates "0.7173". Note that the degree of similarity of the utterance content in the other sets of users indicates "0". From such an evaluation result, the information processing apparatus 100' can recognize the user Uc and the user Ud as a group having a conversation, and recognize the user Ue and the user Uf as another group having a conversation.

By using the mechanism as described above, the information processing apparatus 100' can group a plurality of users from which the voice data has been acquired into one or more groups, and perform control to acquire the keywords described above and provide information (for example, content) according to the keywords for each group. That is, in the case of the example illustrated in Figs. 13 to 15, the information processing apparatus 100' may extract the content related to the topic highly relevant to the keyword acquired from the voice data corresponding to the utterance content of the users Uc and Ud and transmit information corresponding to the content to the terminal apparatuses 300 of the users Uc and Ud. Similarly, the information processing apparatus 100' may extract the content related to the topic highly relevant to the keyword acquired from the voice data corresponding to the utterance content of the users Ue and Uf, and transmit information corresponding to the content to the terminal apparatuses 300 of the users Ue and Uf.

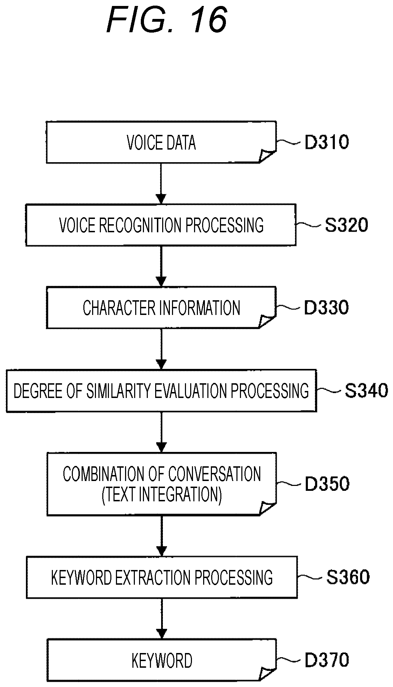

For example, Fig. 16 is an explanatory diagram for explaining an example of processing of the information processing apparatus 100' according to the variation, illustrating an example of processing for extracting a keyword after the information processing apparatus 100' evaluates the degree of similarity of the utterance content of the users.

As illustrated in Fig. 16, the information processing apparatus 100' performs voice recognition processing on the voice data D310 acquired from each of the terminal apparatuses 300c to 300f to convert the voice data D310 into character information D330 (S320). Next, the information processing apparatus 100' evaluates the degree of similarity between the character information D330 corresponding to each of the terminal apparatuses 300c to 300f, thereby specifying a combination (i.e., a group) of the conversations of the users Uc to Uf of each of the terminal apparatuses 300c to 300f. At this time, the information processing apparatus 100' may integrate the character information D330 corresponding to each terminal apparatus 300 (in other words, each user) for each combination of conversations to generate integrated data D350 (S340). Then, the information processing apparatus 100' extracts keyword D370 on the basis of a predetermined condition from the character information (for example, the integrated data D350) obtained by converting the voice data D310 for each combination of conversations (S360). Thus, the keyword D370 is extracted for each combination of conversations.

Furthermore, the information processing apparatus 100' may extract the content according to the keyword D370 extracted for each combination (that is, a group) of the conversation on the basis of a similar method as in the above-described embodiment, and transmit the content (or information corresponding to the content) to the terminal apparatus 300 of the user included in the group. Therefore, the information processing apparatus 100' can extract, for each group, content that is more relevant to the content of the conversation between the users included in the group individually for each group, and provide the information corresponding to the content as a topic to the users included in the group.

Note that, in the above method, in a case where conversations on similar topics are made in a plurality of different sets, it can be assumed that the plurality of sets is recognized as one group. Even in such a case, a topic that is highly relevant to the content of the conversations of each of the plurality of sets is provided.

Heretofore, with reference to Figs. 13 to 16, as a variation, an example of a mechanism for the information processing system 1 according to an embodiment of the present disclosure to acquire a keyword for each conversation group and provide information (content) according to the keyword has been described.

Note that, in the above description, the information processing system 1 has been described focusing on an example in a case where users are grouped according to the content of conversation, but the grouping method is not necessarily limited to the above-described example.

For example, grouping of users may be performed on the basis of the position information (in other words, position information of the user) of the terminal apparatus 300 acquired by global navigation satellite system (GNSS) or the like. As a specific example, a plurality of users located near each other may be recognized as one group. Furthermore, as another example, a plurality of users moving so as to be close to each other may be recognized as one group. Of course, these examples are merely examples, and the method is not particularly limited as long as the users can be grouped on the basis of the position information described above.

Furthermore, by using wireless communication between the terminal apparatuses 300 such as Bluetooth (registered trademark) or beacons, the relative positional relationship between a plurality of terminal apparatuses 300 (and thus between a plurality of users) can also be recognized. Therefore, the users of the plurality of terminal apparatuses 300 may be recognized as one group according to the relative positional relationship between the plurality of terminal apparatuses 300.

Furthermore, the group may be set statically. As a specific example, the terminal apparatuses 300 of a plurality of users may be registered in advance as a group. Furthermore, as another example, network service settings such as social networking service (SNS) may be used for user grouping. For example, a plurality of users registered in a desired group in the network service may be recognized as belonging to a common group in the information processing system 1 according to the present embodiment. Similarly, a plurality of users registered in a group on a message service may be recognized as belonging to a common group in the information processing system 1 according to the present embodiment.

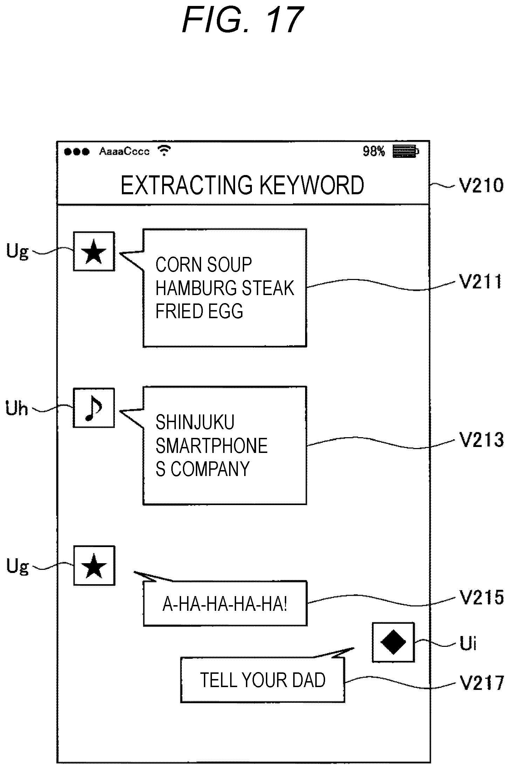

Furthermore, the functions achieved by the information processing system 1 according to an embodiment of the present disclosure can be applied to various network services. For example, Fig. 17 is an explanatory diagram for explaining an application example of the information processing system according to an embodiment of the present disclosure, illustrating an example of a case where the functions achieved by the information processing system 1 are applied to a message service.

In the example illustrated in Fig. 17, in the message service, users Ug, Uh, and Ui are registered as a group. Furthermore, the users Ug and Uh share a place and have a conversation, and the voice data corresponding to a result of collection of the conversation by the terminal apparatuses 300 of the users is used, for example, for processing related keyword extraction by the information processing system 1. That is, in the example illustrated in Fig. 17, for example, as indicated with reference numerals V211 and V213, keywords extracted from the content uttered by the users Ug and Uh are presented as messages.

Furthermore, information associated with the topic corresponding to the keywords extracted at that time may be presented as a message from the information processing system 1. For example, in the case of the example illustrated in Fig. 17, information related to keywords such as "corn soup", "hamburg steak", and "fried egg" extracted according to the utterance content of the user Ug (for example, information regarding western restaurants and the like) may be presented. Similarly, information related to keywords such as "Shinjuku", "smartphone", and "S company" extracted according to the utterance content of the user Ug (for example, information regarding the introduction of electrical appliances of S company and the like) may be presented.

Furthermore, as indicated with reference numeral V215, an acoustic sound such as a user's laughter may be converted into character information, and the character information may be presented as a message. Note that the conversion from an acoustic sound to character information can be achieved by, for example, applying machine learning or the like to perform association between the acoustic sound and the character information. Of course, as long as various acoustic sounds can be converted into character information, the method for that purpose is not particularly limited.

With the above configuration, for example, it is possible to present information extracted from the conversation between the users Ug and Uh even to the user Ui who does not share the place of conversation.

Note that, as indicated with reference numeral V217, it is also possible to present a message corresponding to a user input as in the conventional message service. With such a configuration, it is also possible to achieve communication between the users Ug and Uh sharing the place of conversation and the user Ui who is not in the place.

<<5. Hardware configuration>>

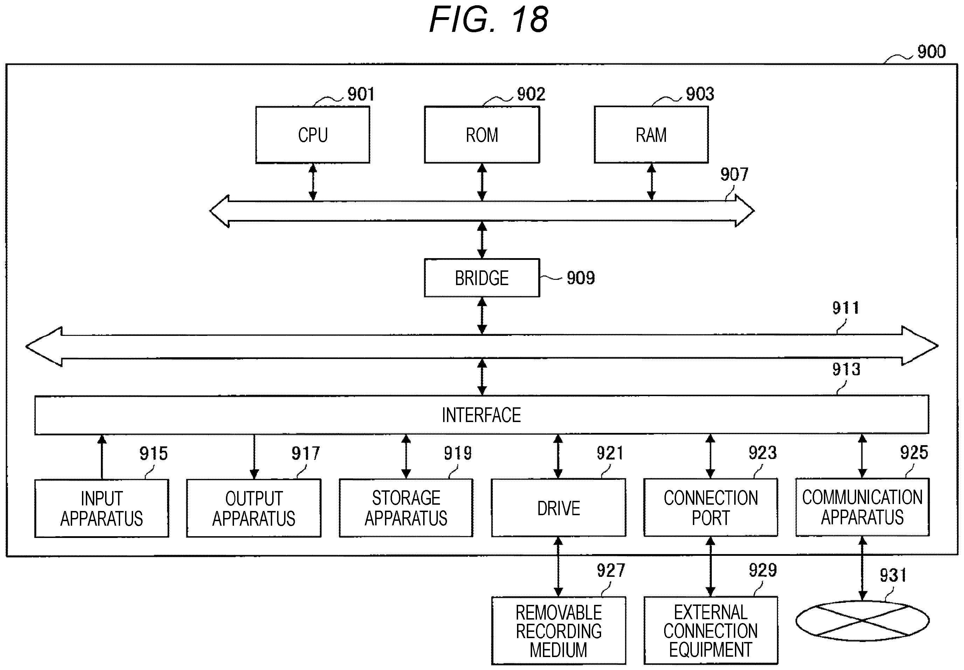

Next, with reference to Fig. 18, the details of an example of a hardware configuration of the information processing apparatus constituting the information processing system according to an embodiment of the present disclosure, such as the information processing apparatus 100 and the terminal apparatus 200 described above are described. Fig. 18 is a function block diagram illustrating a configuration example of the hardware configuration of the information processing apparatus constituting the information processing system according to an embodiment of the present disclosure.

An information processing apparatus 900 constituting the information processing system according to the present embodiment mainly includes a CPU 901, a ROM 902, and a RAM 903. Furthermore, the information processing apparatus 900 further includes a host bus 907, a bridge 909, an external bus 911, an interface 913, an input apparatus 915, an output apparatus 917, a storage apparatus 919, a drive 921, a connection port 923, and a communication apparatus 925.

The CPU 901 functions as an arithmetic processing apparatus and a control apparatus, and controls the overall or a part of operation of the information processing apparatus 900 according to various programs recorded in the ROM 902, the RAM 903, the storage apparatus 919, or a removable recording medium 927. The ROM 902 stores a program, an arithmetic parameter, or the like used by the CPU 901. The RAM 903 primarily stores programs used by the CPU 901, parameters that change as appropriate during execution of the programs, and the like. They are interconnected by the host bus 907 including an internal bus, e.g., a CPU bus or the like. For example, the control unit 210 of the terminal apparatus 200 illustrated in Fig. 2 and the control unit 110 of the information processing apparatus 100 illustrated in Fig. 3 can be configured by the CPU 901.

The host bus 907 is connected to an external bus 911, e.g., a peripheral component interconnect/interface (PCI) bus or the like via the bridge 909. Furthermore, an input apparatus 915, an output apparatus 917, a storage apparatus 919, a drive 921, a connection port 923, and a communication apparatus 925 are connected to the external bus 911 via an interface 913.

The input apparatus 915 is an operation means operated by the user, for example, a mouse, a keyboard, a touch panel, a button, a switch, a lever, a pedal, and the like. Furthermore, the input apparatus 915 may be, for example, a remote control means (e.g., remote controller) using infrared ray or other electric waves or external connection equipment 929 such as a cellular phone or a PDA corresponding to operation of the information processing apparatus 900. Moreover, the input apparatus 915 includes, for example, an input control circuit or the like which generates an input signal on the basis of information input by the user using the aforementioned input means and outputs the input signal to the CPU 901. The user of the information processing apparatus 900 can input various types of data or give an instruction of a processing operation with respect to the information processing apparatus 900 by operating the input apparatus 915.

The output apparatus 917 includes an apparatus that can visually or aurally notify the user of acquired information. As such apparatuses, there is a display apparatus such as a CRT display apparatus, a liquid crystal display apparatus, a plasma display apparatus, an EL display apparatus, or a lamp, a sound output apparatus such as a speaker and a headphone, a printer apparatus, and the like. The output apparatus 917 outputs, for example, results acquired according to various processing performed by the information processing apparatus 900. Specifically, the display apparatus displays results obtained by various processing performed by the information processing apparatus 900 as text or images. On the other hand, the sound output apparatus converts audio signals including reproduced voice data, acoustic data, and the like into analog signals and outputs the analog signals. For example, the display unit 280 and the acoustic output unit 270 of the terminal apparatus 200 illustrated, for example, in Fig. 2 can be configured by the output apparatus 917.

The storage apparatus 919 is an apparatus for data storage, formed as an example of the storage unit of the information processing apparatus 900. The storage apparatus 919 includes, for example, a magnetic storage device such as a hard disk drive (HDD), a semiconductor storage device, an optical storage device, a magneto-optical storage device, or the like. The storage apparatus 919 stores programs executed by the CPU 901, various data, and the like. For example, the storage unit 290 of the terminal apparatus 200 illustrated in Fig. 2 and the storage unit 190 of the information processing apparatus 100 illustrated in Fig. 3 can be configured by any of the storage apparatus 919, the ROM 902, and the RAM 903, a combination of two or more of the storage apparatus 919, the ROM 902, and the RAM 903.

The drive 921 is a recording medium reader/writer, and is mounted on the information processing apparatus 900 internally or externally. The drive 921 reads information recorded on a removable recording medium 927 such as a magnetic disk, an optical disk, a magneto-optical disk, or a semiconductor memory, which is mounted, and outputs the information to the RAM 903. Furthermore, the drive 921 can also write a record on the removable recording medium 927 such as a magnetic disk, an optical disk, a magneto-optical disk, or a semiconductor memory, which is mounted. The removable recording medium 927 is, for example, a DVD medium, an HD-DVD medium, a Blu-ray (registered trademark) medium, or the like. Furthermore, the removable recording medium 927 may be a CompactFlash (registered trademark) (CF), a flash memory, a secure digital (SD) memory card, or the like. Furthermore, the removable recording medium 927 may be, for example, an integrated circuit (IC) card on which a non-contact IC chip is mounted, an electronic device, or the like.

The connection port 923 is a port for directly connecting to the information processing apparatus 900. Examples of the connection port 923 include a universal serial bus (USB) port, an IEEE1394 port, a small computer system interface (SCSI) port, and the like. Other examples of the connection port 923 include an RS-232C port, an optical audio terminal, and a high-definition multimedia interface (HDMI) (registered trademark) port, and the like. By connecting the external connection device 929 to the connection port 923, the information processing apparatus 900 acquires various data directly from the external connection device 929, or provides various data to the external connection device 929.

The communication apparatus 925 is, for example, a communication interface including a communication device or the like for connection to a communication network (network) 931. The communication apparatus 925 is, for example, a communication card or the like for a wired or wireless local area network (LAN), Bluetooth (registered trademark) or wireless USB (WUSB). Furthermore, the communication apparatus 925 may be a router for optical communication, a router for asymmetric digital subscriber line (ADSL), various communication modems, or the like. For example, the communication apparatus 925 can transmit and receive signals and the like to/from the Internet and other communication equipment according to a predetermined protocol, for example, TCP/IP or the like. Furthermore, the communication network 931 connected to the communication apparatus 925 is configured by a wired or wirelessly connected network or the like, and may be, for example, the Internet, a home LAN, infrared communication, radio wave communication, satellite communication, or the like. For example, the wireless communication units 230 and 250 of the terminal apparatus 200 illustrated in Fig. 2 and the communication unit 130 of the information processing apparatus 100 illustrated in Fig. 3 can be configured by the communication apparatus 925.

Heretofore, an example of the hardware configuration capable of achieving the functions of the information processing apparatus 900 constituting the information processing system according to the embodiment of the present disclosure is indicated. The components may be configured using universal members, or may be configured by hardware specific to the functions of the components. Accordingly, according to a technical level at the time when the present embodiment is carried out, it is possible to appropriately change the hardware configuration to be used. Note that, although not illustrated in Fig. 18, various configurations corresponding to the information processing apparatus 900 constituting the information processing system are naturally provided.

Note that a computer program for achieving each function of the information processing apparatus 900 constituting the information processing system according to the present embodiment described above can be produced and installed in a personal computer or the like. Furthermore, it is also possible to provide a computer readable recording medium storing such a computer program. The recording medium is, for example, a magnetic disk, an optical disk, a magneto-optical disk, a flash memory, or the like. Furthermore, the above computer program may be delivered via a network, for example, without using a recording medium. Furthermore, the number of computers that executes the computer program is not particularly limited. For example, the computer program may be executed by a plurality of computers (for example, a plurality of servers or the like) in cooperation with each other.

<<6. Conclusion>>

As described above, in the information processing system according to the present embodiment, the information processing apparatus acquires one or more keywords extracted on the basis of a voice uttered by one or more users. Furthermore, the information processing apparatus compares the feature amount calculated according to the word constituting the character information included in the content of one or more pieces of content, and the acquired one or more keywords to extract at least some content from the one or more pieces of content. Examples of the feature amount include the feature amount matrix IM and the feature vector KWV described above.

With such a configuration, according to the information processing system according to the present embodiment, information associated with a topic that is more relevant to the content uttered by the user at that time, in other words, information more appropriate to the user's preference according to the situations at that time can be extracted and provided to the user.

Furthermore, according to the information processing system according to the present embodiment, it is possible to extract a keyword on the basis of the content of a conversation between users and present information associated with a topic that is more relevant to the keyword. That is, according to the information processing system according to the present embodiment, the user can passively acquire information according to the situations at that time or information that is more appropriate to one's own preferences even without performing an active operation (in other words, complicated operation) such as inputting a search keyword.

Note that, in the above description, a description has been given with a focus on the case where the content to be extracted on the basis of the keyword is data such as a document (that is, document data), but as long as character information is included, the type of content to be extracted is not particular limited. As a specific example, content such as moving images, still images, and music can also be a subject to be extracted on the basis of keywords in a case where, for example, the content includes character information as attribute information such as meta information. That is, by calculating a feature amount (for example, a feature amount matrix IM) on the basis of character information included in each content, the content can be a subject for extraction. Furthermore, a coupon, a ticket, and the like may be included as the content, which is a subject for extraction. Therefore, for example, in a case where information associated with a store taken up in a user's conversation is extracted as a keyword, a coupon that can be used at the store can be presented (provided) to the user.

Furthermore, in the above description, an example in which a keyword is extracted on the basis of voice data corresponding to a result of collection of a voice uttered by a user has been mainly described. However, information from which a keyword is extracted is not necessarily limited to the voice data. For example, data such as a mail or a message input to a message service includes character information as information, and can therefore be a subject for keyword extraction. Furthermore, since data such as moving images captured by imaging also includes voice data, it can be a subject for keyword extraction. That is, any data including character information itself or information that can be converted into character information can be a subject of processing related to keyword extraction by the information processing system according to the present embodiment.

The preferred embodiments of the present disclosure have been described above with reference to the accompanying drawings, while the technical scope of the present disclosure is not limited to the above examples. A person skilled in the art may find various alterations and variations within the scope of the appended claims, and it should be understood that they will naturally come under the technical scope of the present disclosure.

Furthermore, the effects described in this specification are merely illustrative or exemplified effects, and are not limitative. That is, with or in the place of the above effects, the technology according to the present disclosure may achieve other effects that are clear to those skilled in the art from the description of this specification.

Note that the configuration below also falls within the technical scope of the present disclosure.

(1) An information processing apparatus including:

an acquisition unit configured to acquire one or more keywords extracted on the basis of a voice uttered by one or more users; and
an extraction unit configured to compare a feature amount calculated according to a word constituting character information included in content of one or more pieces of content and the acquired one or more keywords to extract at least some content from the one or more pieces of content.

(2) The information processing apparatus according to (1), further including: an output control unit configured to perform control so that information corresponding to the extracted content is presented via a predetermined output unit.

(3) The information processing apparatus according to (2), in which
the acquisition unit acquires, for each group, the keyword extracted on the basis of a voice uttered by the user belonging to the group, and
the output control unit performs control so that information corresponding to the content extracted on the basis of the keyword corresponding to the group is presented to a user belonging to the group.

(4) The information processing apparatus according to (3), in which the group is set according to relevance of content indicated by a voice uttered by each of the one or more users.

(5) The information processing apparatus according to (3), in which the group is set on the basis of a positional relationship between each of the one or more users.

(6) The information processing apparatus according to (3), in which the group is set on the basis of a relative positional relationship between apparatuses associated with each of the one or more users.

(7) The information processing apparatus according to any one of (1) to (6), in which the feature amount includes information corresponding to an appearance frequency of a predetermined word in character information included in the content.

(8) The information processing apparatus according to any one of (1) to (7), in which the feature amount includes information corresponding to the number of pieces of content in which a predetermined word is included as character information.

(9) The information processing apparatus according to any one of (1) to (8), in which the extraction unit extracts at least some content of the one or more pieces of content on the basis of a feature vector corresponding to the number of appearances of each of the one or more keywords and a feature amount matrix corresponding to the feature amount of each of the one or more pieces of content.

(10) The information processing apparatus according to any one of (1) to (9), further including:

a conversion unit configured to convert the voice into character information, in which
the acquisition unit acquires the keyword extracted from the character information obtained by converting the voice.

(11) The information processing apparatus according to any one of (1) to (10), in which the acquisition unit acquires the keyword extracted on the basis of the voice collected by another apparatus connected via a network.

(12) The information processing apparatus according to any one of (1) to (10), further including:

a sound collection unit configured to collect the voice, in which
the acquisition unit acquires the keyword extracted on the basis of the voice collected by the sound collection unit.

(13) The information processing apparatus according to any one of (1) to (12), in which
the content includes character information as document data, and
the feature amount is calculated on the basis of the document data.

(14) The information processing apparatus according to any one of (1) to (13), in which
the content includes character information as attribute information, and
the feature amount is calculated on the basis of the attribute information.

(15) An information processing method, by a computer, including:

acquiring one or more keywords extracted on the basis of a voice uttered by one or more users; and
comparing a feature amount calculated according to a word constituting character information included in content of one or more pieces of content and the acquired one or more keywords to extract at least some content from the one or more pieces of content.

(16) A program causing a computer to execute:

acquiring one or more keywords extracted on the basis of a voice uttered by one or more users; and
comparing a feature amount calculated according to a word constituting character information included in content of one or more pieces of content and the acquired one or more keywords to extract at least some content from the one or more pieces of content.

REFERENCE SIGNS LIST

1, 2    Information processing system
100     Information processing apparatus
110     Control unit
111     Keyword acquisition unit
113     Content extraction unit
115     Communication control unit
130     Communication unit
180     Storage unit
190     Storage unit
200     Terminal apparatus
210     Control unit
220     Antenna unit
230     Wireless communication unit
240     Antenna unit
250     Wireless communication unit
260     Sound collection unit
270     Acoustic output unit
280     Display unit

290  Storage unit
300  Terminal apparatus

**Claims**

1. An information processing apparatus comprising:

    an acquisition unit configured to acquire one or more keywords extracted on a basis of a voice uttered by one or more users; and
    an extraction unit configured to compare a feature amount calculated according to a word constituting character information included in content of one or more pieces of content and the acquired one or more keywords to extract at least some content from the one or more pieces of content.

2. The information processing apparatus according to claim 1, further comprising: an output control unit configured to perform control so that information corresponding to the extracted content is presented via a predetermined output unit.

3. The information processing apparatus according to claim 2, wherein
    the acquisition unit acquires, for each group, the keyword extracted on a basis of a voice uttered by the user belonging to the group, and
    the output control unit performs control so that information corresponding to the content extracted on a basis of the keyword corresponding to the group is presented to a user belonging to the group.

4. The information processing apparatus according to claim 3, wherein the group is set according to relevance of content indicated by a voice uttered by each of the one or more users.

5. The information processing apparatus according to claim 3, wherein the group is set on a basis of a positional relationship between each of the one or more users.

6. The information processing apparatus according to claim 3, wherein the group is set on a basis of a relative positional relationship between apparatuses associated with each of the one or more users.

7. The information processing apparatus according to claim 1, wherein the feature amount includes information corresponding to an appearance frequency of a predetermined word in character information included in the content.

8. The information processing apparatus according to claim 1, wherein the feature amount includes information corresponding to a number of pieces of content in which a predetermined word is included as character information.

9. The information processing apparatus according to claim 1, wherein the extraction unit extracts at least some content of the one or more pieces of content on a basis of a feature vector corresponding to a number of appearances of each of the one or more keywords and a feature amount matrix corresponding to the feature amount of each of the one or more pieces of content.

10. The information processing apparatus according to claim 1, further comprising:

    a conversion unit configured to convert the voice into character information, wherein
    the acquisition unit acquires the keyword extracted from the character information obtained by converting the voice.

11. The information processing apparatus according to claim 1, wherein the acquisition unit acquires the keyword extracted on a basis of the voice collected by another apparatus connected via a network.

12. The information processing apparatus according to claim 1, further comprising:

    a sound collection unit configured to collect the voice, wherein
    the acquisition unit acquires the keyword extracted on a basis of the voice collected by the sound collection unit.

13. The information processing apparatus according to claim 1, wherein
the content includes character information as document data, and
the feature amount is calculated on a basis of the document data.

14. The information processing apparatus according to claim 1, wherein
the content includes character information as attribute information, and
the feature amount is calculated on a basis of the attribute information.

15. An information processing method, by a computer, comprising:

acquiring one or more keywords extracted on a basis of a voice uttered by one or more users; and
comparing a feature amount calculated according to a word constituting character information included in content
of one or more pieces of content and the acquired one or more keywords to extract at least some content from
the one or more pieces of content.

16. A program causing a computer to execute:

acquiring one or more keywords extracted on a basis of a voice uttered by one or more users; and
comparing a feature amount calculated according to a word constituting character information included in content
of one or more pieces of content and the acquired one or more keywords to extract at least some content from
the one or more pieces of content.

# FIG. 1

# FIG. 2

200

220

WIRELESS
COMMUNICATION UNIT 230

240

WIRELESS
COMMUNICATION UNIT 250

SOUND
COLLECTION UNIT 260

ACOUSTIC
OUTPUT UNIT 270

DISPLAY UNIT 280

STORAGE UNIT 290

CONTROL UNIT 210

# FIG. 3

100

130 — COMMUNICATION UNIT

110 — CONTROL UNIT

111 — KEYWORD ACQUISITION UNIT

113 — CONTENT EXTRACTION UNIT

115 — COMMUNICATION CONTROL UNIT

190 — STORAGE UNIT

# FIG. 4

VOICE DATA — D110

VOICE RECOGNITION PROCESSING — S120

CHARACTER INFORMATION — D130

KEYWORD EXTRACTION PROCESSING — S140

KEYWORD — D150

## FIG. 5

VOICE DATA ~D110

S120

FEATURE EXTRACTION PROCESSING ~S121

↓

FEATURE AMOUNT ~D121

↓

ACOUSTIC SCORE CALCULATION PROCESSING ~S123 ← ACOUSTIC MODEL ~D123

↓

WORD SCORE CALCULATION PROCESSING ~S125 ← RECOGNITION DICTIONARY ~D125

↓

LANGUAGE SCORE CALCULATION PROCESSING ~S127 ← LANGUAGE MODEL ~D127

↓

CHARACTER INFORMATION ~D130

## FIG. 6

CHARACTER INFORMATION ~D130

S140

MORPHOLOGICAL ANALYSIS PROCESSING ~S141

↓

WORD LIST ~D141

↓

FILTER PROCESSING (WORD CLASS FILTER PROCESSING) ~S143 ← FILTERING CONDITION (WORD CLASS LIST) ~D143

↓

KEYWORD ~D150

# FIG. 7

| WORD | WATASHI | WA | SUSHI | GA | SUKI | DESU | . |
|------|---------|----|----|----|----|------|---|
| WORD CLASS | NOUN | POSTPOSITIONAL PARTICLE | NOUN | POSTPOSITIONAL PARTICLE | NOUN | POSTPOSITIONAL PARTICLE | SYMBOL |

# FIG. 8

| WORD | SUSHI | SUKI |
|------|-------|------|
| WORD CLASS | NOUN | NOUN |

# FIG. 9

## FIG. 10

V110

TOPIC LIST

► TOPIC HEADLINE #1

► TOPIC HEADLINE #2

► TOPIC HEADLINE #3

V111

⊗ CANCEL

## FIG. 11

V120

TOPIC HEADLINE LIST #1

V121

SUMMARY OF DOCUMENT

V123

THERE ARE RELATED PRODUCTS

V125

⊗ CANCEL

# FIG. 12

V130

RELATED PRODUCTS

▶ PRODUCT NAME #1

▶ PRODUCT NAME #2

▶ PRODUCT NAME #3

V131

⊗ CANCEL

FIG. 13

# FIG. 14

## FIG. 15

| UTTERANCE | I WANT TO EAT SUSHI | THERE IS GOOD RESTAURANT IN GINZA | LET'S PLAY SOCCER THIS WEEKEND | ACTUALLY, I PREFER BASEBALL |
|---|---|---|---|---|
| I WANT TO EAT SUSHI | — | 0.6762 | 0 | 0 |
| THERE IS GOOD RESTAURANT IN GINZA | 0.6762 | — | 0 | 0 |
| LET'S PLAY SOCCER THIS WEEKEND | 0 | 0 | — | 0.7173 |
| ACTUALLY, I PREFER BASEBALL | 0 | 0 | 0.7173 | — |

EP 3 678 130 A1

# FIG. 16

| | |
|---|---|
| VOICE DATA | D310 |
| ↓ | |
| VOICE RECOGNITION PROCESSING | S320 |
| ↓ | |
| CHARACTER INFORMATION | D330 |
| ↓ | |
| DEGREE OF SIMILARITY EVALUATION PROCESSING | S340 |
| ↓ | |
| COMBINATION OF CONVERSATION (TEXT INTEGRATION) | D350 |
| ↓ | |
| KEYWORD EXTRACTION PROCESSING | S360 |
| ↓ | |
| KEYWORD | D370 |

# FIG. 17

EXTRACTING KEYWORD ~V210

Ug

★ | CORN SOUP
HAMBURG STEAK
FRIED EGG ~V211

Uh

♪ | SHINJUKU
SMARTPHONE
S COMPANY ~V213

Ug

★

A-HA-HA-HA-HA! ~V215

◆ ~Ui

TELL YOUR DAD ~V217

# FIG. 18

## INTERNATIONAL SEARCH REPORT

| International application No. |
| --- |
| PCT/JP2018/029003 |

**A. CLASSIFICATION OF SUBJECT MATTER**
Int. Cl. G06F17/30(2006.01)i, G10L15/00(2013.01)i, G10L15/10(2006.01)i

According to International Patent Classification (IPC) or to both national classification and IPC

**B. FIELDS SEARCHED**

Minimum documentation searched (classification system followed by classification symbols)
Int. Cl. G06F17/30, G10L15/00, G10L15/10

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2005-78411 A (MATSUSHITA ELECTRIC INDUSTRIAL CO., LTD.) 24 March 2005, paragraphs [0041]-[0051] (Family: none) | 1-16 |
| Y | JP 2001-209662 A (SONY CORP.) 03 August 2001, claim 4 & US 2001/0041977 A1, claim 4 | 1-16 |
| Y | JP 2017-76166 A (GOURMET NAVIGATOR INC.) 20 April 2017, paragraphs [0055]-[0060] (Family: none) | 4-6 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 26.10.2018 | 06.11.2018 |

| Name and mailing address of the ISA/<br>　Japan Patent Office<br>　3-4-3, Kasumigaseki, Chiyoda-ku,<br>　Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

**Patent documents cited in the description**

- JP 2003178096 A